Europäisches Patentamt

(19) European Patent Office

Office européen des brevets

(11) Publication number: **0 088 824**
**A1**

(12) **EUROPEAN PATENT APPLICATION**

(21) Application number: **82110329.8**

(22) Date of filing: **10.11.82**

(51) Int. Cl.³: **G 01 C 19/64**
**H 01 S 3/083**

(30) Priority: **15.03.82 US 358154**

(43) Date of publication of application:
**21.09.83 Bulletin 83/38**

(84) Designated Contracting States:
**CH DE FR GB LI NL SE**

(71) Applicant: **Rockwell International Corporation**
**2230 East Imperial Highway**
**El Segundo, California 90245(US)**

(72) Inventor: **Gudmundsen, Richard Austin**
**12052 Larchwood Lane**
**Santa Ana California 92705(US)**

(74) Representative: **Wagner, Karl H.**
**P.O. Box 246 Gewürzmühlstrasse 5**
**D-8000 Munich 22(DE)**

(54) **Dielectric ring laser gyro.**

(57) A ring laser gyro includes a resonator structure having a dielectric cylindrical ring with highly polished surfaces. The dielectric cylindrical ring is of such thickness and length as to support propagation only of selected modes of energy excitation by confining to within the ring wavelengths of light impinging the surfaces of the ring at other than the critical angle and allowing the selected mode of light to escape into the gain medium at the critical angle. A gain medium surrounds the dielectric cylinder, and reflectors for extracting counter rotating light beams generated by said gain structure and resonator are included adjacent said dielectric ring to intercept from opposite directions evenescent light waves supported by said dielectric ring.

EP 0 088 824 A1

0088824

DIELECTRIC RING LASER GYRO

BACKGROUND OF THE INVENTION

1. FIELD OF THE INVENTION

This invention relates to improvements in ring laser gyroscopes, and more particularly to a ring laser gyroscope in which a resonator structure is provided adjacent a gain medium and about which rotation is determined.

2. DESCRIPTION OF THE PRIOR ART

In the past, ring laser gyroscopes, or gyros, have been fabricated incorporating a laser as a part of an enclosed optical loop or path through which the laser light has been directed in opposite directions. When the optical path was caused to rotate relative to a fixed frame of reference about an axis of rotational sensitivity the laser light traveling in one direction in the enclosed optical loop appeared to traverse the optical path faster in one direction than in the other, according to the well known Sagnac effect. Thus, the frequency of the laser light in each direction was changed due to the relativistic effect an amount relatable to the rate of rotation.

Ideally, the counter-traveling light beams should be of a single mode. However, due to scattering and other phenomena, discussed below, constraining light in both beams to a single mode is extremely difficult.

As the counter-traveling beams are of the same mode, current laser gyros are subject to a phenomena called "mode locking" or "lock-in" of the two counter-traveling modes as the inertial rotation rate of the gyro drops to small rotation rates, on the order, for example, of 20 degrees per hour, or so. Mode locking is an effect in which the counter rotating light beams lock or couple onto each other at the same frequency, making the gyro output appear to be zero. Numerous gyros have been advanced to attempt to reduce the effects of mode locking, such as for instance, U. S. Patents 3,741,657 and 3,845,819. U. S. Patent 4,132,482 shows a typical method for reducing mode locking by dithering the gyro at a rate equal to the lock-in characteristic of the gyro.

As mentioned, one problem which causes inaccuracies in laser gyros is the scattering of photons from one mode to another, as a first-order coupling effect. Scattering may be caused, for instance, by impurities or inhomogeneities in the laser cavity, and results in the photons traveling in one direction influencing the photons traveling in the other direction, making the interpretation of the light emerging from the laser ring difficult, if not impossible to interpret.

Spatial "hole burning" is a second-order coupling effect which also causes interpretation difficulties. "Spatial holes" are formed or "burned" in a ring laser as the two counter rotating modes produce standing waves in the laser cavity when the difference frequency is small, for example, at low rotation rates. In efforts to correct for such spatial holes, it has been found, at least in the case of of free-running ruby lasers, that affixing fixed external mirrors and physically oscillating the ruby back and forth longitudinally with an audio frequency driver prevents the formation of the "spatial holes" in the distribution.

"Frequency hole burning", another source of laser gyro inaccuracies, results from a selective depopulation of an inhomogeneous upper-state group through laser stimulated emission. In a ring laser gyro, if the gain distribution peak is centered between the right and left hand moving modes as the rotation decreases, an overlap between the two "holes" appears, and one mode quenches the other.

"Mode-pulling" is still another phenomena which causes inaccuracies in interpreting the data. "Mode-pulling" is a frequency shift due to anomalous dispersion in the laser cavity, which affects the scale factor, but its effects can be generally compensated by appropriate gyro design.

In efforts to compensate for these effects, it has been proposed, among other things, to bias the gyro, so that at slow speeds the rotation "appears" to be higher; however, the biasing techniques used in the past have increased the costs of the gyros, and, additionally often have reduced the reliability of the devices achieved. One example of a compensating biasing technique which has been proposed is shown in U. S. Patent 3,373,650.

Recently, it has been proposed to use a fiber optic ring as a part of the laser gyro, such as shown in U. S. Patent 4,013,365. The noise, scattering effects and the like, however, introduced by such fiber rings has been a significant problem. After intensive efforts have been made to produce optical fibers with extremely low loss, discoveries of materials, such as silica-Ge mixtures, which have extremely low loss in the vicinity of 0.2 db per kilometer have been made. Other materials, such as ZnCl, theoretically should exhibit a scattering loss less than 0.01 db per kilometer, as well.

One effort to advance a gyro which has reduced problems associated with lock-in, bias drifts, and scale factor variations is shown in a paper of Ezekiel et al. entitled "Passive Ring Resonator Laser Gyroscope", Applied Physics Letters, 5/1/77. In their paper, Ezekiel et al. show two separate rings or cavities, one containing a separate gain medium, and the other a

- 4 -

0088824

Fabry-Perot interferometer, as the rotation sensing element.

BRIEF DESCRIPTION OF THE INVENTION

In light of the above, it is, therefore, an object of the invention to provide an improved ring laser gyro.

It is another object of the invention to provide a gyro of the type described in which frequency hole burning and spatial hole burning effects are reduced.

It is another object of the invention to provide a gyro of the type described in which frequency lock-in and photon scattering are reduced.

It is yet another object of the invention to provide a gyro of the type described in which a gain medium is placed immediately adjacent a resonator structure in which single mode counter rotating light beams are supported.

It is still another object of the invention to provide a gyro of the type described which can be of low cost fabrication and which provides reliable output.

These and other objects, features and advantages will become apparent to those skilled in the art from the following detailed description, when read in conjunction with the accompanying drawing and appended claims.

0088824

In the following description, the word silica should not be construed to limit the choice of materials to silica alone, but exemplifies one of the very low-optical-loss dielectric materials having an index of refraction greater than ones at the laser wavelength which could be used herein.

In accordance with a broad aspect of the invention, a ring laser gyro is presented, including a ring resonator structure including a silica ring and a gain medium surrounding the silica ring. The silica ring is fabricated so that light within the ring will penetrate the gain medium a distance depending upon the mode of light in the ring, enabling only a selected mode to be coupled into the gain medium.

In accordance with another broad aspect of the invention, a resonator structure for use in a ring laser gyro is presented. The resonator includes a silica cylinder with highly polished surfaces. The silica cylinder is of a particular thickness and length to support propagation of only selected modes of energy excitation. The resonator also includes a gain medium surrounding the silica cylinder. In one embodiment, the resonator structure is configured so that the thickness of the ring confines wavelengths of light impinging the surfaces of the ring at other than about the critical angle to within the ring and allows the selected mode of light to escape into the gain medium at about the critical angle to be amplified.

0088824

BRIEF DESCRIPTION OF THE DRAWING

The invention is illustrated in the accompanying drawing in which:

FIGURE 1 is a graph of the refractive index for silica, n, as a function of the wavelength of light therein.

FIGURE 2 is a graph of the coefficient of internal reflection vs. angle of incidence of light for n = 1.46.

FIGURE 3 is a plan view representation of a dielectric ring, showing the internal reflections of light and the geometrical relationships thereof to the configuration of the dielectric ring.

FIGURE 4 is a diagram showing the reflections of light predicted according to the Goos-Hanchen effect.

FIGURE 5 is a graph of angle of incidence versus penetration of evenescent waves into a rare medium, in accordance with the Goos-Hanchen effect.

FIGURE 6 is a diagram representing one apparatus for practicing the resonator structure, in accordance with a preferred embodiment of the invention, illustrating one means for combining the output rays from the critical mode to produce beats required for a digital output.

And FIGURE 7 is a perspective view of an exploded gyro fabricated in accordance with the principles of a preferred embodiment of the invention.

In the various figures of the drawing, like reference numerals are used to denote like parts. In addition, various sizes and dimensions of the parts have been exaggerated or distorted for ease of description and clarity of illustration.

DETAILED DESCRIPTION OF THE PREFERRED EMBODIMENTS

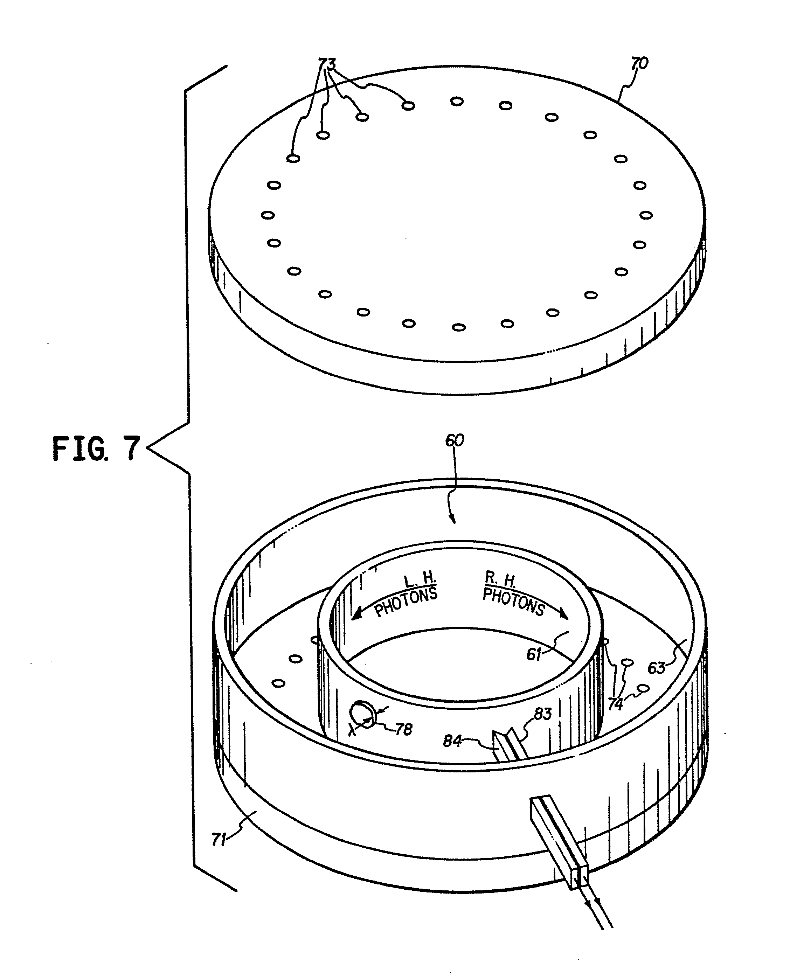

As described in detail below, the gyro in accordance with one embodiment of the invention as shown in Fig. 7, is configured using a silica ring about 0.2 meters in diameter with an inner diameter approximately 2 centimeters smaller than the outer diameter and with a similar thickness along the z-axis, (the z-axis being the cylinder axis). The ring is fabricated out of very high purity, stress relived silica, with all surfaces very highly polished, or super polished.

Silica appears to be one good choice of materials for use in the resonator of the invention because, among other things, silica can be made with extremely low scattering loss, is highly stable, and has a low coefficient of thermal expansion. Other materials, however, might be suitable also.

In the following description of the gyro in accordance with the invention, two optical properties of the dielectric ring must be considered, the indexes of refraction and reflection, as will become apparent from the description of the operation of the gyro set forth below.

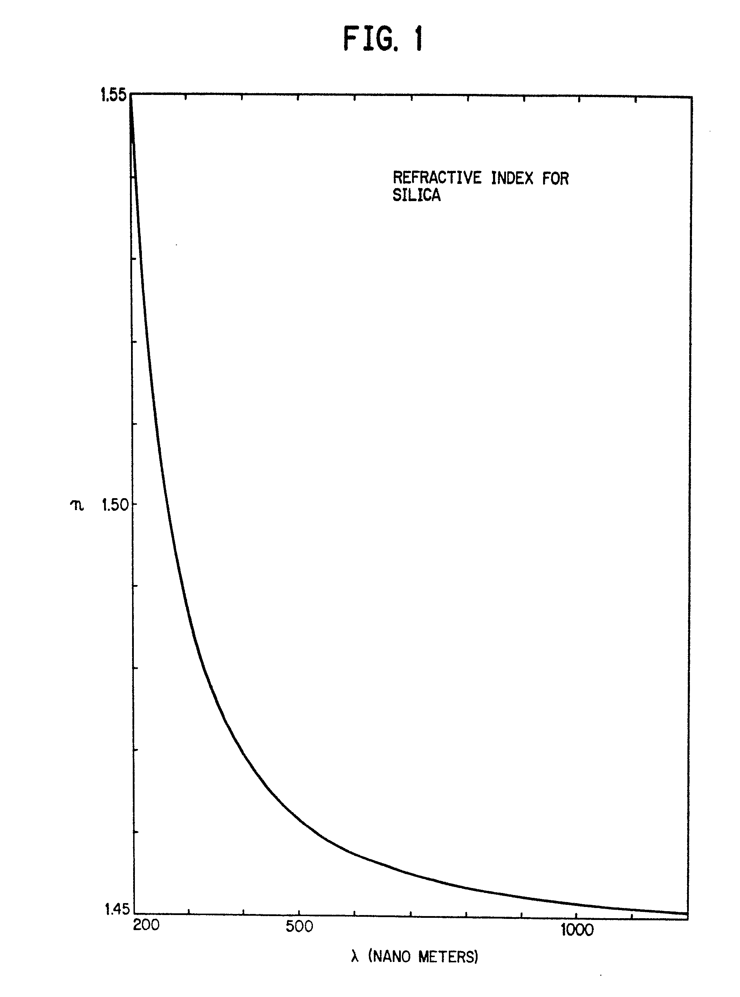

A graph of the refractive index for silica is shown in Fig. 1. It can be seen from Fig. 1 that the refractive index for silica varies approximately exponentially between about 1.45 and 1.55 for wavelengths of light between 200 and 1200 nanometers.

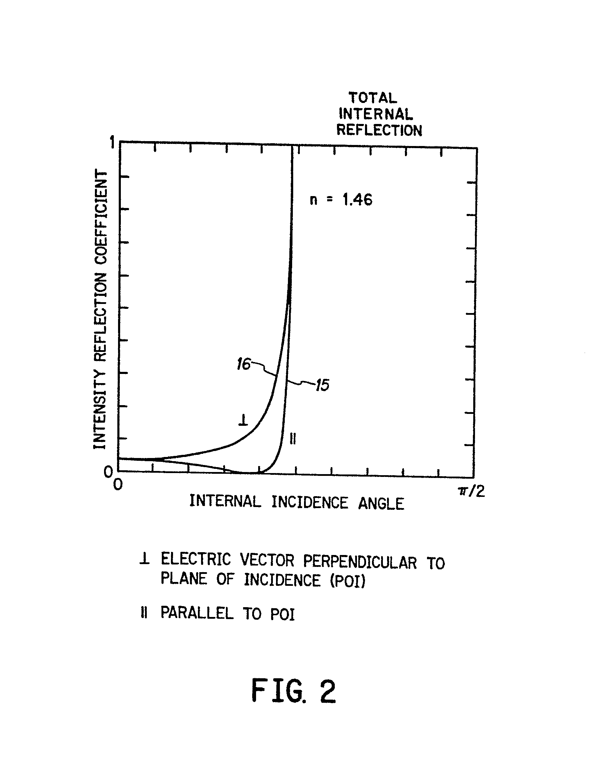

A graph of the reflective index of a material, in this case, silica, is shown in Fig. 2. It can be seen that, in general, the amount of light reflected from a surface varies, depending upon the angle of incidence of the light on the surface. Thus, below the critical angle, $\phi_c$, the fraction of reflected parallel and perpendicularly polarized light beams, denoted by curves 15 and 16, is relatively constant at small angles of incidence, but approaches unity as the angle of incidence approaches the critical angle. Above the critical angle, the light is totally internally reflected.

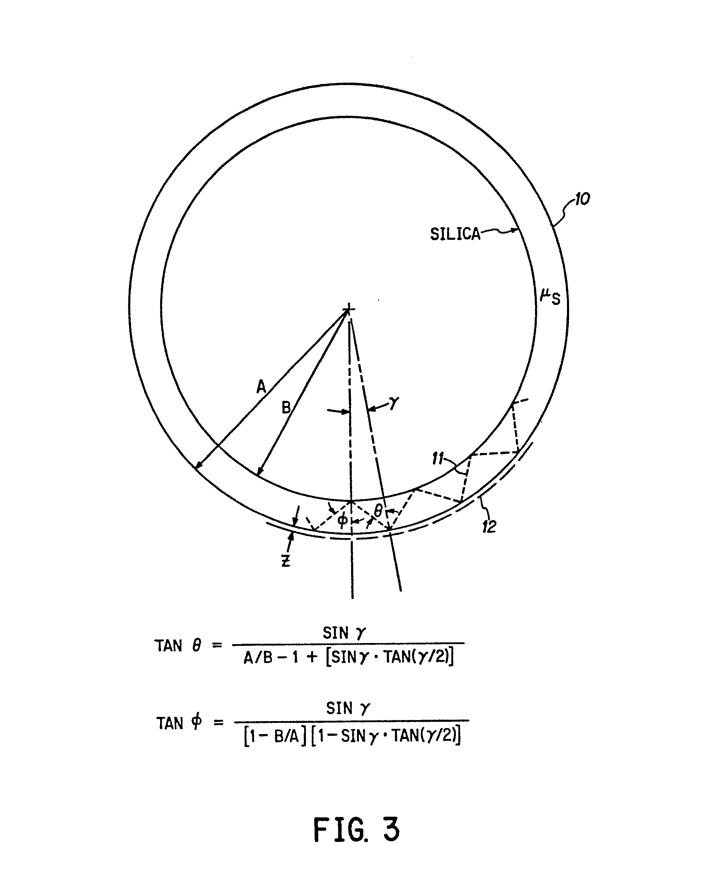

Thus, as shown in Fig. 3, a silica ring 10 is shown, for a general case, having an inside radius A and an outside radius B. It is assumed that a light beam 11 has been produced in the ring 10 to reflect therewithin at an angle, $\theta$. The dimensions of the ring 10 are selected so that for the particular wavelength of light used, an integral number of reflections are produced as the light beam travels once around the ring 10. Thus, in a ring so constructed, a particular light beam travels on the same path each time it traverses the ring 10. The angle between adjacent reflections on opposite sides of the ring measured from the center of the ring is denoted by the angle, $\phi$. In addition, as explained below in detail, according to the Goos-Hanchen effect, evenescent waves are produced by the light circulating and reflecting within the ring 10, the evenescent waves extending beyond the outer radius, A, of the ring 10 a distance Z, denoted by the dotted line 12.

Assuming light having a wavelength of 1.3 microns is introduced into the silica ring 10, the critical angle for a silica-to-vacuum interface is about 761 mradians (or about 43.6 degrees). Using the rayoptic picture of Fig. 3 to describe the resonator, modes which incident the outer surface very close to the critical angle will undergo approximately 50 reflections in going around the ring. As mentioned, the inside and outside diameters are adjusted such that for the critical angle there will be an integer number of reflections for an integer number of revolutions, the product being N. The primary quantum number, which is the total number of wavelengths involved before the path is repeated, is for this structure on the order of one million, yielding a spacing between modes of the order of 250 MHz (for a wavelength of 1.3 microns). The index of refraction of silica at this wavelength is about 1.45.

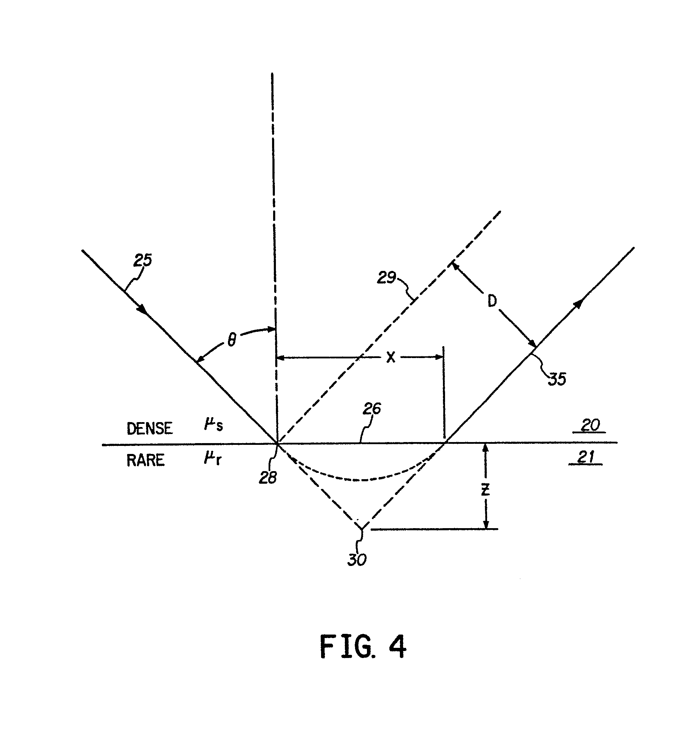

According to the theory of Goos and Hanchen, investigated in some detail by H. K. Lotsche, "Beam Displacement a Total Reflection, the G&H effect, II", published in OPTIK, Vol. 32, pp. 189-204 (1970), as a light beam is reflected from a surface, evenescent waves extend a distance Z beyond the surface into the adjacent medium. This effect is illustrated in Fig. 4, in which a dense medium 20, having an index of refraction of $\mu_s$ is located adjacent a rare medium 21, having an index of refraction of $\mu_r$. A light beam 25 is incident upon the interior surface 26 of the dense medium 20 at the point 28. If the light beam 25 were to reflect at the point 28, it would follow the dotted line 29 after reflection, back into the dense medium 20. However, according to the Goos-Hanchen effect, the beam 25 can be observed to actually penetrate into the rare medium 21 a small distance to appear such that it had been reflected from a point 30, located at the distance Z perpendicularly measured from the surface 26. It has been found that the distance $Z_\perp$ for perpendicularly polarized light is:

$$Z_\perp \cong \frac{\lambda}{2\pi\left( \sin^2\theta - \sin^2\theta_c \right)^{1/2}}$$

And it has been found that the distance $Z_,$ for light parallel polarized light is:

$$Z_, \cong \frac{Z_\perp}{\sin^2\theta_c}$$

where $\sin e_c = \mu_r / \mu_s$

and ( $e_c$ ) is the critical angle.

The distance, $D_\perp$ , therefore, by which the reflection 35 is offset from the direct line of reflection (dotted line 29) in the perpendicular case is:

$$D_\perp \cong \frac{\lambda \sin e}{\pi \left(\sin^2 e - \sin^2 e_c\right)^{1/2}}$$

And the distance $D_{\shortparallel}$ for the parallel case is:

$$D_{\shortparallel} \cong \frac{D_\perp}{\sin^2 e_c}$$

It can be seen from these equations that the penetration of the wave at total internal reflection into the rare meduim is about a wavelength, except for the case of angles close to the critical angle. For this case, very sizable penetrations exist; in fact, the depth penetration can be several hundred wavelengths. When several hundred wavelengths penetrate into the rare medium the ring can be optically coupled with a gain medium surrounding the outside of the ring. As the gain will obviously be proportional to the coupling between the gain medium and the mode in the ring, modes having large penetration will be favored, (for proper design of the ring cirumference), and modes having small or no penetration will be extinguished. Thus, in accordance with the invention, only one single mode having a deep penetration will be excited. As the mode propagates, the effects of diffraction are such as to couple photons out of the mode beyond the critical angle so that tangent rays are seen to escape the mode (providing a loss mechanism, and a means for coupling to the structure from the outside world, as well). The reflection from the inner surface of the ring is well within a critical angle, and the beam penetration into this region is about a wavelength.

The portion of the mode volume which is approximately within 100 wavelengths of the surface is strongly excited by the gas laser discharge. The total angular space for discharge is probably about a millimeter or two in thickness (1000 to 2000 microns); thus, the field is expected to couple with from 5 to 10 percent of the total gas discharge volume.

The diffraction angle associated with the mode is about 50 microradians, so one would expect the operable mode to be centered approximately that angular distance inside of the critical angle.

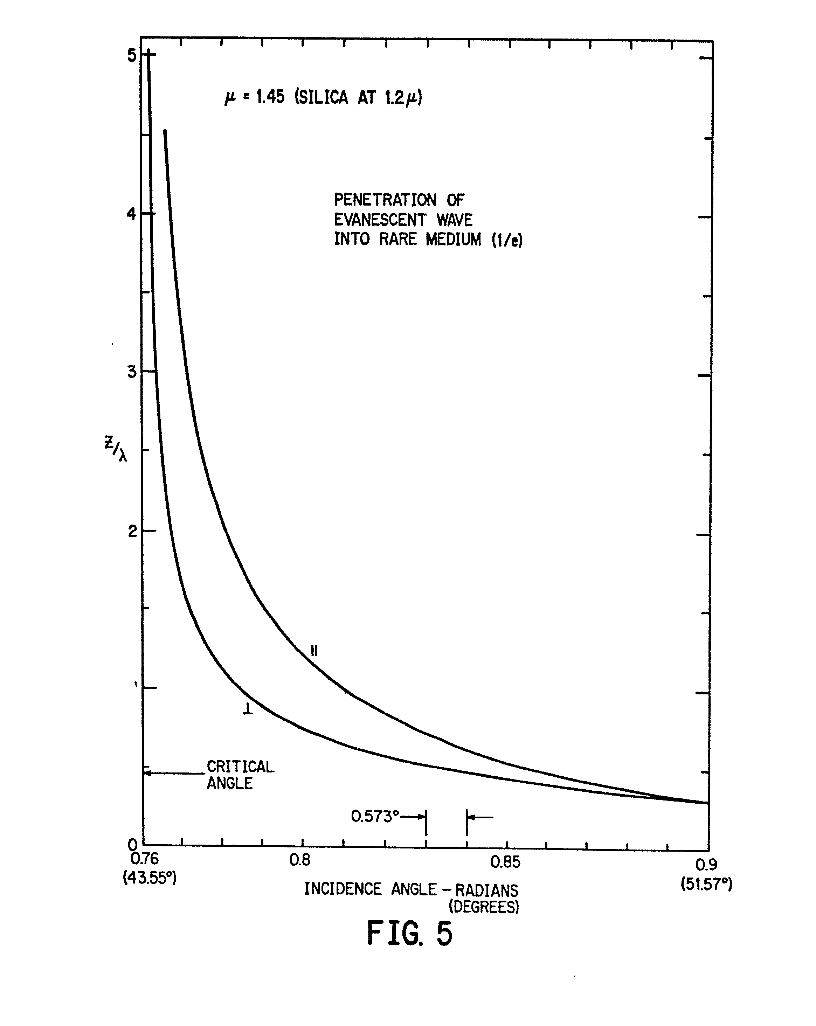

As shown in the graph of Fig. 5, the parallel and perpendicularly polarized beams penetrate from the silica into the adjacent rare medium approximately exponentially. Thus, it can be seen from Figs. 4 and 5 that the parallel polarization mode will be much more strongly coupled than the perpendicular one. Furthermore, strong mode selection will occur, as approximately a 20 percent change in coupling coefficient to the discharge occurs within 1 diffraction limit for the mode.

It should be noted also that the Goos-Hanchen effect leads also to a phase-shift at reflection. It has been estimated that for the ring described, that the phase shift rate per revolution is (2 X pi X 357MHz) for 50 microradians per reflection.

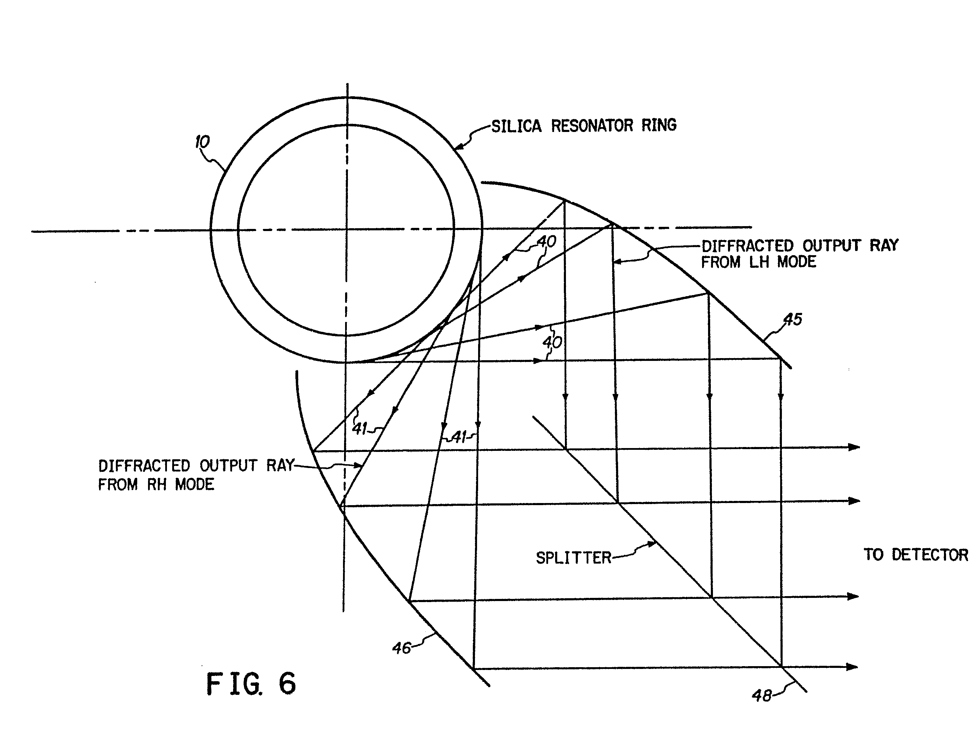

If the dimensions of the silica ring 10 are selected so that the angle of incidence is slightly below the critical angle (see Fig. 2), an amount of light will be allowed to escape tangentially from the ring. Because the light does exit tangentially from the ring, an output mechanism can be employed, in the manner illustrated in Fig. 6. As shown, the exiting counter rotating light waves are denoted by the reference numbers 40 and 41. A pair of curved mirrors 45 and 46 are located adjacent the silica ring 10 so that the exiting beams

0088824

fall upon the mirrors 45 and 46 to be reflected onto a beam splitter/combiner 48. In this case, the beams are combined by the reflected beams 41 passing the splitter/combiner 48 and the reflected beams 40 being reflected from the splitter combiner 48, to be directed onto a detector (not shown).

Another embodiment of the gyro, in accordance with the invention is shown in Fig. 7. In the embodiment illustrated, an inner chamber 60 is defined between an inner silica cylinder 61 and an outer silica cylinder 63. The inner high purity silica cylinder 61 forms a resonator structure, as above described, and the chamber 60 adjacent the silica cylinder 61 forms the laser cavity. In the embodiment shown, the chamber 60 may contain a lasing gas, such as a helium-neon plasma (not shown), or the like. The top and bottom of the cavity 60 are enclosed by silica rings 70 and 71, and located at spaced locations along the center radius of the rings 70 and 71 are, respectively, a plurality of anode and cathode elements 73 and 74. Each cathode and anode element has connected to it a series resistor (not shown) to insure discharge, thereby maintaining the pumping energy to the helium-neon plasma within the chamber 60.

In the manner described above, the evenescent waves penetrating into the chamber 60 interact with the helium-neon plasma in the area 78 to be amplified. The waves within the cylinder 61 which do not penetrate into the chamber 60, including the undesired modes, are extinguished, because there is nothing to support their continuation in the silica cylinder 61.

Thus, the left hand circulating photons within the silica cylinder 61 are indicated by the arrow 80, and the right hand circulating photons are indicated by the arrow 81. For purposes of illustration, the embodiment shown in Fig. 7 is constructed so that the light within the resonator ring 61 falls upon the interface between the resonator 61 and the chamber 60 very close to but

0088824

above the critical angle (see Fig. 2), thereby experiencing total internal reflection within the resonator structure 61. (Compare, for instance, the embodiment of Fig. 6 in which the light within the ring 10 exits the ring tangentially.)

To remove the light from the ring 61, two pick-offs 83 and 84 are respectively provided to remove respective samples of the right and left hand circulating photons to be processed in conventional manner. The pick-offs 83 and 84 operate to intercept the right and left hand energy which is in the evenescent field adjacent the silica ring 61, in accordance with the Goos-Hanchen effect, to optically couple the removed energy for detection.

Although the invention has been described and illustrated with a certain degree of particularity, it is understood that the present disclosure has been made by way of example only and that numerous changes in the combination or arrangement of parts may be resorted to by those skilled in the art without departing from the spirit and scope of the invention as hereinafter claimed.

The invention may be summarized as follows:

1. A resonator structure for use in a ring laser gyro comprising:

a dielectric cylindrical ring structure with highly polished surfaces,

said dielectric cylinder being of such thickness and length to support propagation of selected modes of energy excitation, and

a gain medium bounding the outside surface of the cylindrical dielectric ring.

2. The resonator structure of 1 wherein the thickness of the ring confines to within the ring wavelengths of light impinging the surfaces of the ring at other than about the critical angle and allows the selected mode of light to penetrate into the gain medium at about the critical angle.

3. The resonator structure of 1 wherein the thickness of the ring is such as to produce resonator modes confined by total internal reflection.

4. The resonator structure of 1 further comprising means adjacent said dielectric cylinder to intercept from opposite directions evenescent light waves adjacent by said dielectric cylinder.

5. The resonator structure of 1 further comprising means adjacent said dielectric cylinder to reflect light emitted from said dielectric cylinder.

6. A dielectric ring resonator structure for use in a ring laser gyro,

( 6, continued)

comprising:

a dielectric ring; and

a gain medium surrounding the dielectric ring, whereby light within said ring penetrates the gain medium depending upon the mode of light in the ring enabling a selected mode to be coupled into the gain meduim.

7. The structure of 6 wherein the inside and outside diameters of the ring are such that there are an integer number of reflections for an integer number of revolutions of light within said ring at the critical angle.

8. The structure of 6 or 7 wherein said dielectric ring is of high purity silica.

9. The structure of 7 wherein said dielectric ring is dimensioned so that light is totally internally reflected therewithin and only evenescent energy is present within the gain medium adjacent the ring.

10. The structure of 7 wherein said dielectric ring is dimensioned so that light of only a selected mode escapes the ring into the gain medium.

11. A ring laser gyro, comprising:

a resonator structure including:

a dielectric cylindrical structure with highly polished surfaces,

said dielectric structure being of such thickness and length to support propagation only of selected modes of energy excitation, and

a gain medium bounding the structure,

( 11, continued)

0088824

and means for extracting energy from the counter rotating light beams generated by said gain structure and resonator.

12. The ring laser gyro of 11 wherein the thickness of the ring confines to within the ring wavelengths of light impinging the surfaces of the ring at other than about the critical angle and allows the selected mode of light to escape into the gain medium at about the critical angle.

13. The ring laser gyro of 12 in which the means for extracting the counter rotating light beams comprises a pair of reflective surfaces in proximity to the ring to reflect light emitted therefrom.

14. The ring laser gyro of 13 in which said pair of reflective surfaces are concave mirrors.

15. The ring laser gyro of 11 wherein the thinkness of the ring is such as to have total internal reflection.

16. The ring laser gyro of 15 in which the means for extracting the energy from the counter rotating light beams comprises means adjacent said dielectric cylinder to intercept from opposite directions evenescent light waves supported by said dielectric cylinder.

17. A ring laser gyro comprising:
two concentric dielectric cylindrical rings;
means for enclosing a volume between said concentric rings;
a laser gas medium within said enclosed volume;

( 17, continued)

means for exciting the laser gas medium;

an interior one of said concentric cylinders being dimensioned to propagate an integer number of wavelengths of light, and forming a resonator structure;and

means for removing energy from counter rotating light waves within the resonator structure.

18. The ring laser gyro of 17 wherein said enclosing means comprise silica rings.

19. The ring laser gyro of 17 wherein said laser gas medium is a helium neon plasma.

20. The ring laser gyro of 17 wherein said interior cylinder is dimensioned to have total internal reflection.

21. The ring laser gyro of 20 wherein said means for removing energy comprises a pair of pick off elements adjacent said interior cylinder to intercept a portion of an evanescent field generated in each direction by said counter rotating light waves.

22. The ring laser gyro of 17 wherein said interior dielectric cylinder is dimensioned to allow light at only a selected mode to escape said interior cylinder into the enclosed medium.

23. The ring laser gyro of 22 wherein the means for removing energy comprises a pair of reflective surfaces disposed to receive light

( 23, continued)

0088824

escaping from said interior cylinder,

24. The ring laser gyro of 23 wherein each of said pair of reflective surfaces comprise a concave mirror.

I CLAIM

1. A resonator structure for use in a ring laser gyro comprising:

a dielectric cylindrical ring structure with highly polished surfaces,

said dielectric cylinder being of such thickness and length to support propagation of selected modes of energy excitation, and

a gain medium bounding the outside surface of the cylindrical dielectric ring.

2. The resonator structure of claim 1 wherein the thickness of the ring confines to within the ring wavelengths of light impinging the surfaces of the ring at other than about the critical angle and allows the selected mode of light to penetrate into the gain medium at about the critical angle.

3. The resonator structure of claim 1 wherein the thinkness of the ring is such as to produce resonator modes confined by total internal reflection.

4. A dielectric ring resonator structure for use in a ring laser gyro, comprising:

a dielectric ring; and

a gain medium surrounding the dielectric ring, whereby light within said ring penetrates the gain medium depending upon the mode of light in the ring enabling a selected mode to be coupled into the gain mediuim.

5. The structure of claim 4 wherein the inside and outside diameters of the ring are such that there are an integer number of reflections for an integer number of revolutions of light within said ring at the critical angle.

0088824

6. A ring laser gyro, comprising:

a resonator structure including:

a dielectric cylindrical structure with highly polished surfaces,

said dielectric structure being of such thickness and length to support propagation only of selected modes of energy excitation, and

a gain medium bounding the structure,

and means for extracting energy from the counter rotating light beams generated by said gain structure and resonator.

7. The ring laser gyro of claim 6 wherein the thickness of the ring confines to within the ring wavelengths of light impinging the surfaces of the ring at other than about the critical angle and allows the selected mode of light to escape into the gain medium at about the critical angle.

8. The ring laser gyro of claim 7 in which the means for extracting the counter rotating light beams comprises a pair of reflective surfaces in proximity to the ring to reflect light emitted therefrom.

9. A ring laser gyro comprising:

two concentric dielectric cylindrical rings;

means for enclosing a volume between said concentric rings;

a laser gas medium within said enclosed volume;

means for exciting the laser gas medium;

an interior one of said concentric cylinders being dimensioned to propagate an integer number of wavelengths of light, and forming a resonator structure; and

means for removing energy from counter rotating light waves within the resonator structure.

10. The ring laser gyro of claim 9 wherein said enclosing means comprise silica rings.

# FIG. 1

REFRACTIVE INDEX FOR
SILICA

$n$

λ (NANO METERS)

TOTAL
INTERNAL
REFLECTION

n = 1.46

INTENSITY REFLECTION COEFFICIENT

16

15

⊥

‖

0

0

INTERNAL INCIDENCE ANGLE

π/2

⊥ ELECTRIC VECTOR PERPENDICULAR TO
  PLANE OF INCIDENCE (POI)

‖ PARALLEL TO POI

FIG. 2

$$TAN\ \theta = \frac{SIN\ \gamma}{A/B - 1 + [SIN\gamma \cdot TAN(\gamma/2)]}$$

$$TAN\ \phi = \frac{SIN\ \gamma}{[1 - B/A][1 - SIN\gamma \cdot TAN(\gamma/2)]}$$

FIG. 3

FIG. 4

FIG. 5

FIG. 6

SILICA RESONATOR RING

DIFFRACTED OUTPUT RAY
FROM LH MODE

DIFFRACTED OUTPUT RAY
FROM RH MODE

SPLITTER

TO DETECTOR

FIG. 7

## DOCUMENTS CONSIDERED TO BE RELEVANT

| Category | Citation of document with indication where appropriate, of relevant passages | Relevant to claim | CLASSIFICATION OF THE APPLICATION (Int. Cl 3) |
|---|---|---|---|
| D,A | APPLIED PHYSICS LETTERS, vol. 30, no. 9, May 1, 1977, pages 478-480, New York, US S. EZEKIEL et al.: "Passive ring resonator laser gyroscope" * Whole document * | 1 | G 01 C  19/64 H 01 S  3/083 |
| | --- | | |
| A | US-A-3 538 453  (W.S. MILLER) * Column 6, line 70 - column 7, line 14 * | 1 | |
| | --- | | |
| A | US-A-3 504 296  (N.P. HUFFNAGEL) * Whole document * | 1 | |
| | ----- | | |

TECHNICAL FIELDS SEARCHED (Int. Cl 3)

G 01 C  19/64
H 01 S  3/083
H 01 S  3/06
H 01 S  3/08
H 01 S  3/081

The present search report has been drawn up for all claims

| Place of search THE HAGUE | Date of completion of the search 24-06-1983 | Examiner DE BUYZER H.J. |
|---|---|---|